# EUROPEAN PATENT APPLICATION

(11) **EP 4 640 435 A1**
(43) Date of publication of application: **29.10.2025**
(21) Application number: 25171610.6
(22) Date of filing: 22.04.2025
(51) Int. Cl.: B41J 2/175, B41J 29/46

(54) **IMAGE FORMING APPARATUS CAPABLE OF DETERMINING WHETHER ENOUGH INK REMAINS**

(30) Priority: 23.04.2024 JP 2024070073
(71) Applicant: KYOCERA Document Solutions Inc., Osaka-shi, Osaka 540-8585 (JP)
(72) Inventor: FUKATA, Takuya, Osaka-shi, Osaka, 540-8585 (JP)
(74) Representative: Herrero & Asociados, S.L.

(57) **Abstract**

An image forming apparatus (1) capable of loading a plurality of ink containers (31) containing ink of the same color includes: a plurality of container loaders (32) capable of removably loading the respective ink containers (31); a total remaining amount calculator (101) that calculates a total remaining amount of ink of the same color based on respective remaining amounts of ink in the ink containers (31) loaded in the container loaders (32); and a remaining amount condition determiner (102) that determines whether or not a remaining amount alert condition has occurred in which the total remaining amount of ink has reduced to a predetermined lower limit.

## Description

The present invention relates to image forming apparatuses and particularly relates to a technique for ordering a recording agent container containing a recording agent, such as ink or toner.

In an image forming apparatus loaded with a recording agent container (for example, an ink container) containing a recording agent, such as ink or toner, printing cannot be done when the recording agent container becomes empty. Therefore, some image forming apparatuses have the function of automatically ordering a new recording agent container when a near-end condition has occurred where the recording agent in the recording agent container is running out. Furthermore, there is also proposed a technique for detecting a near-end condition of toner.

### SUMMARY

A technique improved over the aforementioned techniques is proposed as one aspect of the present invention.

An image forming apparatus according to an aspect of the present invention includes an image forming device, a plurality of container loaders, and a control device. The image forming device forms an image on a recording medium using a recording agent. The control device includes a processor and functions, through the processor executing a control program, as a remaining amount detector and a remaining amount condition determiner. The plurality of container loaders are capable of removably loading respective recording agent containers each containing a recording agent of the same color. The remaining amount detector detects a remaining amount of recording agent in each of the recording agent containers loaded in the container loaders. The remaining amount condition determiner determines, based on the remaining amount of recording agent in each of the recording agent containers detected by the remaining amount detector, whether or not a remaining amount alert condition has occurred in which the remaining amount of recording agent in one of the recording agent containers loaded in the container loaders or a total remaining amount of recording agent of the same color has reduced to a predetermined lower limit.

### BRIEF DESCRIPTION OF THE DRAWINGS

FIG. 1 is a partial cross-sectional front view showing the structure of an image formation system made up by including an image forming apparatus according to one embodiment of the present invention.
FIG. 2 is a front view schematically showing the structure of a sub apparatus included in the image forming apparatus.
FIG. 3 is a functional block diagram schematically showing an essential internal configuration of the image forming apparatus.
FIG. 4 is a flowchart showing an example of processing performed by a control device of the image forming apparatus.
FIG. 5 is a flowchart showing another example of processing performed by the control device of the image forming apparatus.

### DETAILED DESCRIPTION

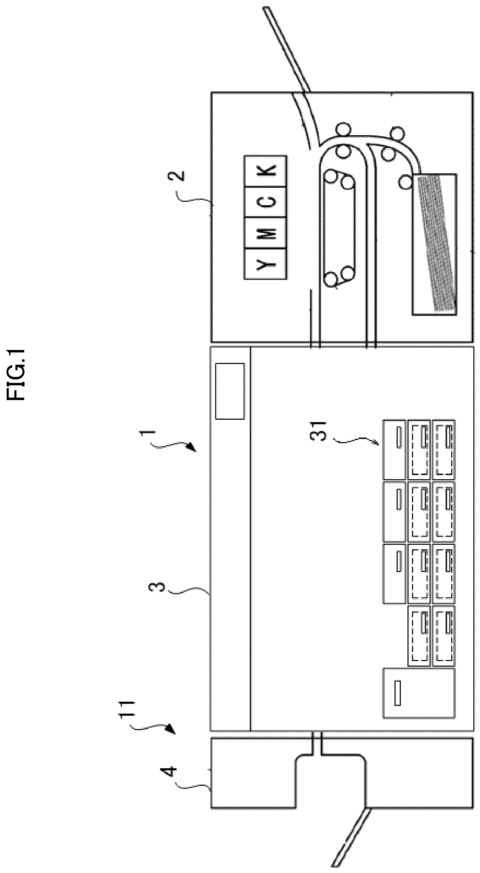

Hereinafter, a description will be given of an image forming apparatus according to an embodiment of the present invention with reference to the drawings. FIG. 1 is a partial cross-sectional front view showing the structure of an image formation system made up by including an image forming apparatus according to one embodiment of the present invention.

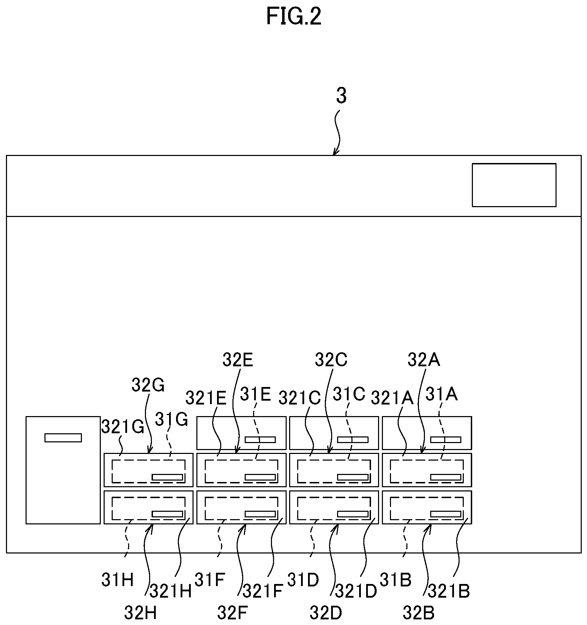

An image formation system 11 includes an image forming apparatus 1 and a post-processing device 4 connected to the image forming apparatus 1. The image forming apparatus 1 is, for example, a multifunction peripheral having a plurality of functions, including a copy function and a print function, and forms an image on a recording paper sheet as a recording medium using ink as a recording agent in an ink-jet system. The image forming apparatus 1 includes: a main apparatus 2 that forms an image on a recording paper sheet; and a sub apparatus 3 which is loaded with ink containers 31 (ink containers 31A to 31H in FIG. 2) containing ink and supplies the ink in the ink containers 31 to the main apparatus 2. The ink container 31 is an example of the recording agent container defined in CLAIMS.

FIG. 2 is a front view schematically showing the structure of the sub apparatus 3 included in the image forming apparatus 1. The image forming apparatus 1 is capable of loading a plurality of (two in this embodiment) ink containers containing ink of the same color. As shown in FIG. 2, the sub apparatus 3 includes container loaders 32A to 32H capable of removably loading respective ink containers 31A to 31H each shown by a rectangle of broken-lines. The container loaders 32A, 32B load respective ink containers 31A, 31B containing black ink, the container loaders 32C, 32D load respective ink containers 31C, 31D containing cyan ink, the container loaders 32E, 32F load respective ink containers 31E, 31F containing magenta ink, and the container loaders 32G, 32H load respective ink containers 31G, 31H containing yellow ink.

The container loaders 32A to 32H are provided with respective container covers 321A to 321H that open and close respective loading openings in the container loaders 32A to 32H. The ink containers 31A to 31H, the container loaders 32A to 32H, and the container covers 321A to 321H are also referred to collectively as the ink containers 31, the container loaders 32, and the container covers 321, respectively.

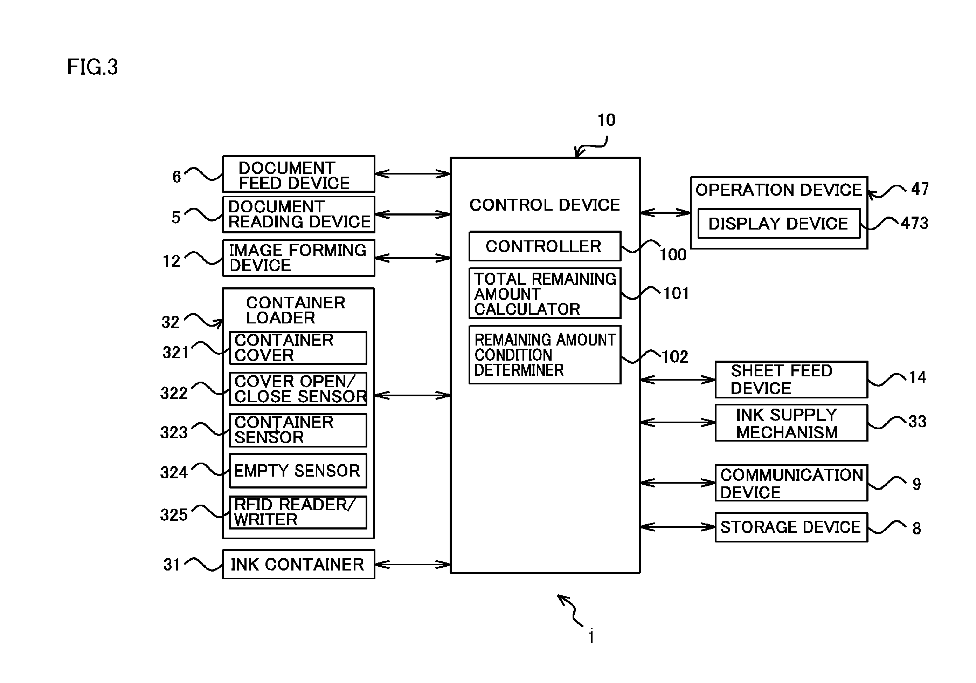

FIG. 3 is a functional block diagram schematically showing an essential internal configuration of the image forming apparatus 1. The image forming apparatus 1 includes a control device 10, a document feed device 6, a document reading device 5, an image forming device 12, container loaders 32, ink containers 31, a sheet feed device 14, an ink supply mechanism 33, an operation device 47, a communication device 9, and a storage device 8.

The document feed device 6 is capable of being opened and closed with respect to the top surface of the document reading device 5 by being mounted by unshown hinges or the like on the top surface of the document reading device 5, and functions as a document holding cover while the document reading device 5 reads an original document sheet placed on an unshown platen glass. Furthermore, the document feed device 6 is an ADF (auto document feeder), includes an unshown document loading tray, and feeds original document sheets loaded onto the document loading tray to the document reading device 5 sheet by sheet.

The document reading device 5 includes a scanner or the like and reads, with the scanner or the like, an original document sheet fed from the document feed device 6 or an original document sheet placed on the platen glass. Furthermore, the document reading device 5 can sequentially read images of a plurality of original document sheets fed from the document feed device 6.

First, a description will be given of the case where a document reading operation is performed on the image forming apparatus 1. The document reading device 5 optically reads an image of an original document sheet fed to the document reading device 5 by the document feed device 6 or an image of an original document sheet placed on the platen glass and generates image data on the original document sheet. The image data generated by the document reading device 5 is saved in an unshown image memory or the like.

Next, a description will be given of the case where an image forming operation is performed on the image forming apparatus 1. The image forming device 12 includes: respective ink heads that discharge ink drops of different colors (black, cyan, magenta, and yellow); a print conveyance unit, and a dry conveyance unit. Based on image data generated by the document reading operation, image data stored in the image memory or the like, image data received from a computer connected via a network or another image data, the image forming device 12 forms an image on a recording paper sheet as a recording medium fed from the sheet feed device 14, using ink contained in the ink containers 31 loaded in the container loaders 32 in an ink-jet system.

The print conveyance unit includes an endless conveying belt and conveys a recording paper sheet using the conveying belt while facing the ink heads. The dry conveyance unit includes an endless conveying belt, like the print conveyance unit, conveys a recording paper sheet with an image formed thereon, using the conveying belt, and naturally dries the ink adhering to the recording paper sheet while conveying the recording paper sheet.

The recording paper sheet with an image formed thereon by the image forming device 12 is conveyed via the sub apparatus 3 (see FIG. 1) to the post-processing device 4 (see FIG. 1), in which, if necessary, the recording paper sheet is subjected to post-processing, such as stapling.

The sheet feed device 14 includes a plurality of sheet feed cassettes and further includes respective pick-up rollers each of which picks up a recording paper sheet from the associated sheet feed cassette and feeds it to the image forming device 12, a conveyance roller, a conveyance path, and a rotation drive mechanism for the rollers.

Each of the container loaders 32 is provided with a container cover 321, a cover open/close sensor 322, a container sensor 323, an empty sensor 324, and an RFID (radio frequency identification) reader/writer 325. The cover open/close sensor 322 detects an open or closed state of the container cover 321 and is, for example, a limit switch that is turned ON/OFF according to the opening/closing of the container cover 321.

The container sensor 323 detects the presence or absence of an ink container 31 loaded in the container loader 32 and is, for example, a limit switch that is turned ON/OFF according to the attachment/removal of an ink container 31. The empty sensor 324 is a sensor that detects the presence or absence (i.e., an empty state) of ink in the ink container 31 loaded in the container loader 32 and is, for example, an optical sensor.

The RFID reader/writer 325 reads data from and writes data to an RFID tag (not shown) attached to the ink container 31 loaded in the container loader 32. The data to be written to the RFID tag includes a unique product serial number, color information, information on the expiration date, and, at the factory, a default value of an ink capacity of the ink container as information on the remaining ink amount.

A controller 100 to be described hereinafter reads the information on the remaining ink amount recorded on the RFID tag, for example, through the RFID reader/writer 325. Thus, the image forming apparatus 1 (the controller 100) can recognize the remaining amount of ink in the ink container 31. Furthermore, when ink is used (such as during printing or maintenance), the controller 100 detects the amount of ink consumed (for example, calculates the amount of ink consumed by counting the number of discharges of ink liquid from the ink head), calculates the remaining amount of ink in the ink container 31 from the detected amount of ink consumed, and timely writes through the RFID reader/writer 325 information on the calculated remaining amount of ink to the RFID tag to update the information on the remaining ink amount stored in the RFID tag. The controller 100 is an example of the remaining amount detector defined in CLAIMS.

When the ink container 31 is a regular product (a so-called genuine ink container produced as available for use in the image forming apparatus 1), the RFID reader/writer 325 performs appropriate wireless communications with the RFID tag. However, when the ink container 31 is not a regular product (is a non-genuine product), no RFID tag capable of communications with the RFID reader/writer 325 may be attached thereto. In this case, the RFID reader/writer 325 may not be able to perform appropriate wireless communications with the ink container 31 (the RFID tag) and thus may not be able to acquire information on the remaining ink amount in the ink container 31. Whether or not the ink container 31 is a regular product is determined by the controller 100 from the product serial number or the like written on the RFID tag. For example, when the controller 100 reads a product serial number from the RFID tag on the ink container 31 with the RFID reader/writer 325, the controller 100 determines that the ink container 31 is a regular product. On the other hand, when the controller 100 cannot read a product serial number from the RFID tag on the ink container 31, it determines that the ink container 31 is a non-regular product. In addition, the controller 100 determines the expiration date of the ink container 31 from the information on the expiration date read from the RFID tag on the ink container 31 by the RFID reader/writer 325.

The ink supply mechanism 33 supplies ink in the ink containers 31 loaded in the container loaders 32 to the image forming device 12 and includes, for example, a syringe pump, a plurality of pipes, a plurality of valves, and a plurality of coil springs, wherein the syringe pump is connected through the pipes to ink supply ports of the ink containers 31 and connected through the pipes to the image forming device 12. The ink supply port is opened and closed by the valve and the valve is biased by the coil spring.

The operation device 47 includes various types of hard keys to be operated by the user and accepts, according to user's operation on the hard keys, user's instructions for various types of operations and processing executable by the image forming apparatus 1, such as an instruction to execute an image forming operation.

The operation device 47 includes a display device 473 that displays operation guidance and other types of information for the operator. Furthermore, the operation device 47 accepts, through a touch panel provided on the display device 473, input of a user's instruction based on an operation (a touch gesture) of the user on the screen being displayed on the display device 473.

The display device 473 is formed of a liquid crystal display (LCD) or the like. When the operator makes a touch gesture on a button or key being displayed on the screen, the touch panel accepts an instruction associated with a point where the touch gesture has been made. In this case, the touch panel functions as an operation device.

The communication device 9 is a communication interface that sends and receives various types of data to and from external devices (for example, personal computers and a server) in a local area network or on the Internet.

The storage device 8 is a large storage device, such as an HDD (hard disk drive) or an SSD (solid state drive), and stores various control programs and others.

The control device 10 is made up by including a processor, a RAM (random access memory), a ROM (read only memory), and a dedicated hardware circuit. The processor is, for example, a CPU (central processing unit), an ASIC (application specific integrated circuit) or an MPU (micro processing unit). The control device 10 includes the controller 100, a total remaining amount calculator 101, and a remaining amount condition determiner 102.

When the processor operates in accordance with a control program stored in the storage device 8, the control device 10 functions as the controller 100, the total remaining amount calculator 101, and the remaining amount condition determiner 102. However, each of the controller 100, the total remaining amount calculator 101, and the remaining amount condition determiner 102 may not be implemented by the operation of the control device 10 in accordance with the control program but may be constituted by a hardware circuit. Hereinafter, the same applies to the other embodiments unless otherwise stated.

The controller 100 governs the overall operation control of the image forming apparatus 1. The controller 100 is connected to the document feed device 6, the document reading device 5, the image forming device 12, the container loaders 32, the ink containers 31, the sheet feed device 14, the ink supply mechanism 33, the operation device 47, the communication device 9, and the storage device 8 and controls the operations of these components to execute various types of processing necessary for image formation of the image forming apparatus 1. For example, the controller 100 controls the operation of the image forming device 12 to allow the image forming device 12 to perform printing. In doing so, regarding the plurality of ink containers 31 containing ink of the same color, the controller 100 preferentially uses, for printing, an ink container closer to the expiration date or an ink container having a smaller remaining amount of ink.

The total remaining amount calculator 101 calculates, based on the respective remaining amounts R of ink in the ink containers 31 loaded in the container loaders 32, the total remaining amount TR of ink of the same color (ink contained in respective ink containers 31 loaded in container loaders 32 configured to load a plurality of (two in this embodiment) ink containers 31 containing ink of the same color). For example, the total remaining amount TR of black ink is determined by summing the respective remaining amounts R of ink in the ink container 31A and the ink container 31B.

The remaining amount condition determiner 102 determines whether or not a remaining amount alert condition has occurred in which the remaining amount R of ink in an individual one of the ink containers 31 loaded in the container loaders 32 or the total remaining amount TR of ink of the same color has reduced to a predetermined lower limit L. Specific examples of the manner of determination made by the remaining amount condition determiner 102 will be described below in two determination manners. The lower limit L may be settable by the user. In this case, based on the lower limit L from user setting accepted by the operation device 47, the remaining amount condition determiner 102 determines whether or not a remaining amount alert condition has occurred.

In < <Determination Manner 1>>, whether or not a remaining amount alert condition has occurred is determined using the total remaining amount TR of ink of the same color. In <<Determination Manner 2>>, whether or not a remaining amount alert condition has occurred is determined using the remaining amount R of ink in an individual one of the ink containers 31.

<<Determination Manner 1>> When black ink in the ink container 31A is used, the controller 100 detects the amount of the ink consumed and calculates the remaining amount R of ink in the ink container 31A from the amount of the ink consumed.

The total remaining amount calculator 101 sums the remaining amount R of ink in the ink container 31A and the remaining amount R of ink in the ink container 31B containing black ink separately from the ink container 31A to calculate the total remaining amount TR of black ink. Information indicating the respective remaining amounts R of ink in the ink container 31A before use and the ink container 31B before use is recorded on the respective RFID tags. Therefore, the total remaining amount calculator 101 reads from the RFID tags the respective remaining amounts R of ink in the ink containers 31A, 31B before use.

The remaining amount condition determiner 102 calculates the rate RT1 of the total remaining amount TR of black ink to the total capacity (the sum of the default values of the capacities of the ink containers 31A, 31B) and determines whether or not the calculated rate RT1 has reduced to the lower limit L (for example, 10%), thus determining whether or not a remaining amount alert condition has occurred. The lower limit L is not limited to a relative value indicated by the above rate, but may be an absolute value consisting of a predetermined amount of ink.

When a non-regular ink container 31 is loaded in a container loader 32 (when an ink container 31 loaded in a container loader 32 is determined to be a non-regular ink container by the controller 100), the remaining amount condition determiner 102 does not determine, as for ink of the same color as the ink contained in the ink container 31, whether or not a remaining amount alert condition has occurred. The reason for this is that correct information on the remaining ink amount may not be able to be obtained from the non-regular ink container 31.

<<Determination Manner 2>> When ink in the ink container 31A is used, the controller 100 detects the amount of the ink consumed and calculates the remaining amount R of ink in the ink container 31 from the amount of the ink consumed.

The remaining amount condition determiner 102 calculates the rate RT2 of the remaining amount R of ink in the ink container 31 to the capacity (the default value of the capacity of the ink container 31A) and determines whether or not the calculated rate RT2 has reduced to the lower limit L (for example, 10%), thus determining whether or not a remaining amount alert condition has occurred.

As for the container loader 32 not loading an ink container 31, the remaining amount condition determiner 102 does not determine whether or not a remaining amount alert condition has occurred. Furthermore, also as for the ink in a non-regular ink container 31, the remaining amount condition determiner 102 does not determine whether or not a remaining amount alert condition has occurred. As described previously, the reason for this is that correct information on the remaining ink amount may not be able to be obtained from the non-regular ink container 31.

When the remaining amount condition determiner 102 determines that a remaining amount alert condition has occurred, the controller 100 executes predetermined order processing for ordering an ink container 31 containing ink of the same color as the ink as for which a remaining amount alert condition has occurred.

As the above order processing, for example, the controller 100 sends information for ordering the ink container 31 through the communication device 9 to a server managed by an office for ink container delivery service. Alternatively, as the above order processing, the controller 100 controls the display of the display device 473 to allow the display device 473 to display information indicating that the ink container 31 needs to be ordered.

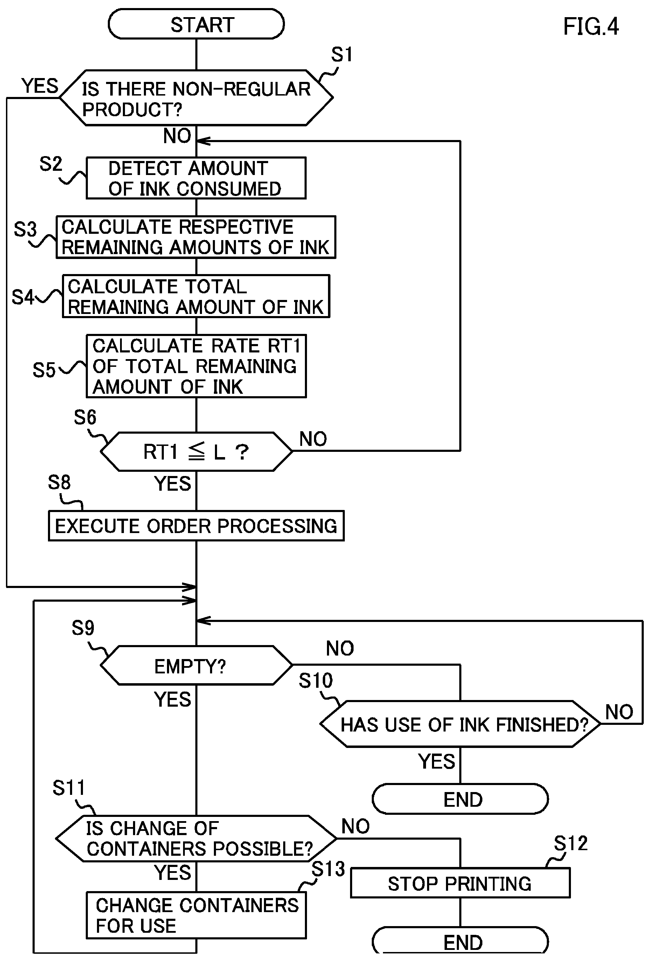

Next, a description will be given of an example of a form of processing for ordering an ink container 31 on the image forming apparatus 1 with reference to the flowchart shown in FIG. 4. This processing is processing executed when ink contained in an ink container 31 is used (such as during printing or during maintenance). The following description is given of the case where the above <<Determination Manner 1> > is used, taking as an example the case where black ink contained in the ink container 31A is used.

When ink contained in the ink container 31A begins to be used, the controller 100 determines whether or not at least one of the ink containers 31A, 31B containing black ink is a non-regular product (S1).

When determining that both the ink containers 31A, 31B are not non-regular products (are regular products) (NO in S1), the controller 100 detects the amount of ink consumed in the ink container 31A (S2) and calculates the respective remaining amounts R of ink in the ink containers 31A, 31B based on the detected amount of ink consumed (S3), and the total remaining amount calculator 101 sums the respective remaining amounts R of ink in the ink containers 31A, 31B to calculate the total remaining amount TR of the ink (S4).

When there is any container loader 32 not loading an ink container 31, the total remaining amount calculator 101 calculates the total remaining amount TR by assuming the remaining amount of ink in an ink container assumed to be loaded in the ink container-free container loader 32 to be zero.

The remaining amount condition determiner 102 calculates the rate RT1 of the total remaining amount TR of black ink to the total capacity (the sum of the default values of the capacities of the ink containers 31A, 31B) (S5) and determines whether or not the calculated rate RT1 has reduced to the lower limit L (for example, 10%) (S6).

When the remaining amount condition determiner 102 determines that the rate RT1 has not reduced to the lower limit L (NO in S6), the processing goes back to S2.

On the other hand, when the remaining amount condition determiner 102 determines that the rate RT1 has reduced to the lower limit L (YES in S6), the controller 100 executes order processing for ordering an ink container 31 containing black ink (S8). For example, when the lower limit L is set to about 10%, both the ink containers are close to be empty and, therefore, the controller 100 executes order processing for ordering two ink containers 31 for black ink. When the lower limit L is set to about 50%, one of the ink containers is highly likely to still contain enough ink and, therefore, the controller 100 executes order processing for ordering a single ink container 31 for black ink.

Subsequently, the controller 100 determines, based on the detection result of the empty sensor 324, whether or not the ink container 31A in use is empty (S9). When determining that the ink container 31A in use is not empty (NO in S9), the controller 100 determines whether or not the use of ink has finished (S10). When the controller 100 determines that the use of ink has finished (YES in S10), this processing ends. On the other hand, when the controller 100 determines that the use of ink has not finished (NO in S10), the processing goes back to S9.

When determining that the ink container 31A in use is empty (YES in S9), the controller 100 determines whether or not a change of the ink container for use to the ink container 31B containing black ink of the same color as in the ink container 31A is possible (it is possible to supply ink from the ink container 31B containing black ink of the same color as in the ink container 31A) (S11). For example, when the ink container 31B is not empty, the controller 100 determines that the change of ink containers is possible.

When determining that the change of the ink container for use to the ink container 31B is not possible (NO in S11), the controller 100 controls the coil spring included in the ink supply mechanism 33 to close the ink supply port of the ink container 31A to stop the use of the ink container 31A and stop printing (S12). Thereafter, this processing ends.

On the other hand, when determining that the change of the ink container for use to the ink container 31B is possible (YES in S11), the controller 100 controls the coil springs included in the ink supply mechanism 33 to close the ink supply port of the ink container 31A and open the ink supply port of the ink container 31B, thus changing ink containers 31 for use and continuing printing (S13). Thereafter, the processing goes back to S9.

When, in S1, the controller 100 determines that at least one of the ink containers 31A, 31B is a non-regular product (YES in S1), the processing goes to S9 (determination of whether or not the ink container 31A in use is empty). The reason for this is that no information on the remaining ink amount may be able to be obtained from the non-regular ink container 31.

In this embodiment, in the case where the image forming apparatus 1 is loaded with a plurality of ink containers 31 containing ink of the same color, order processing is not executed as soon as at least one of the plurality of ink containers 31 containing ink of the same color becomes empty, but executed when all the plurality of ink containers 31 containing ink of the same color become empty. Therefore, there is no need to order any ink container over a relatively long period of time from when the plurality of ink containers 31 are filled up with ink to when they become empty, and ink containers 31 containing ink of the same color can be ordered together at the time in point when the plurality of ink containers 31 become empty. Hence, in this embodiment, in the image forming apparatus where a plurality of ink containers 31 containing ink of the same color are loaded, whether or not to be empty of ink can be determined at an appropriate timing when ink truly needs to be replenished, while the image forming apparatus enjoys the advantage that the period of time from when the plurality of ink containers 31 are filled up with ink to when they become empty is long.

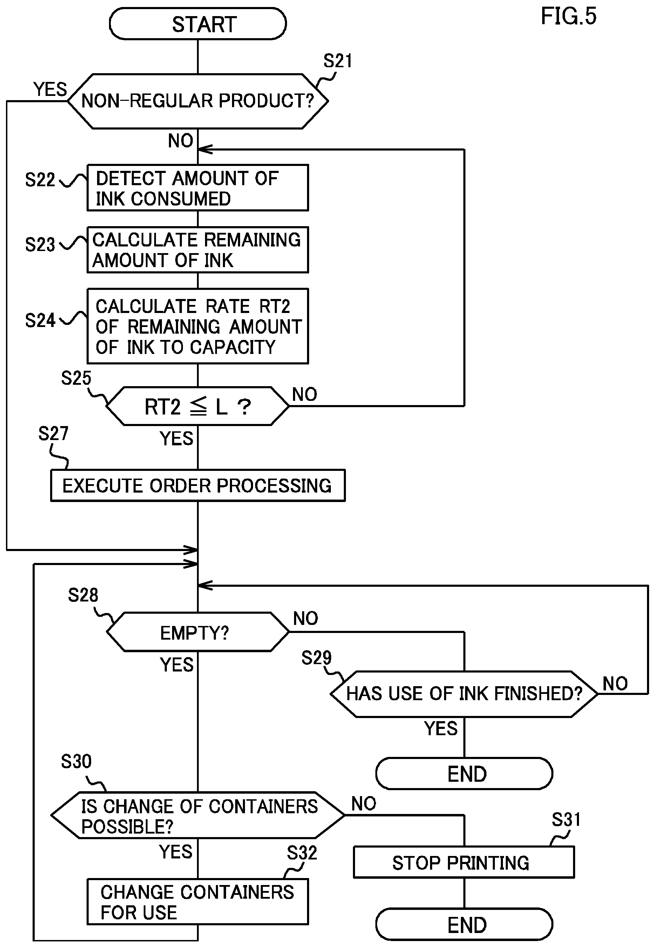

Next, a description will be given of an example of another form of processing for ordering an ink container 31 on the image forming apparatus 1 with reference to the flowchart shown in FIG. 5. This processing is, like the processing shown in FIG. 4, processing executed when ink contained in an ink container 31 is used. The following description is given of the case where the above <<Determination Manner 2>> is used, taking as an example the case where black ink contained in the ink container 31A is used.

When ink contained in the ink container 31A begins to be used, the controller 100 determines whether or not the ink container 31A is a non-regular product (S21).

When determining that the ink container 31A is not a non-regular product (is a regular product) (NO in S21), the controller 100 detects the amount of ink consumed in the ink container 31A (S22) and calculates the remaining amount R of ink in the ink container 31A based on the detected amount of ink consumed (S23).

The remaining amount condition determiner 102 calculates the rate RT2 of the remaining amount R of ink to the default value of the capacity of the ink container 31A (S24) and determines whether or not the calculated rate RT2 has reduced to the lower limit L (S25).

When the remaining amount condition determiner 102 determines that the rate RT2 has not reduced to the lower limit L (NO in S25), the processing goes back to S22.

When the remaining amount condition determiner 102 determines that the rate RT2 has reduced to the lower limit L (YES in S25), the controller 100 executes order processing for ordering an ink container 31 containing black ink (S27).

Subsequently, the controller 100 determines, based on the detection result of the empty sensor 324, whether or not the ink container 31A in use is empty (S28). When determining that the ink container 31A in use is not empty (NO in S28), the controller 100 determines whether or not the use of ink has finished (S29). When the controller 100 determines that the use of ink has finished (YES in S29), this processing ends. On the other hand, when the controller 100 determines that the use of ink has not finished (NO in S29), the processing goes back to S28.

When determining that the ink container 31A in use is empty (YES in S28), the controller 100 determines whether or not a change of the ink container for use to the ink container 31B containing black ink of the same color as in the ink container 31A is possible (S30).

When determining that the change of the ink container for use to the ink container 31B is not possible (NO in S30), the controller 100 closes the ink supply port of the ink container 31A to stop the use of the ink container 31A and stop printing (S31). Thereafter, this processing ends.

On the other hand, when determining that the change of the ink container for use to the ink container 31B is possible (YES in S30), the controller 100 closes the ink supply port of the ink container 31A and opens the ink supply port of the ink container 31B, thus changing ink containers 31 for use and continuing printing (S32). Thereafter, the processing goes back to S28.

When, in S21, the controller 100 determines that the ink container 31A is a non-regular product (YES in S21), the processing goes to S28. The reason for this is that correct information on the remaining ink amount may not be able to be obtained from the non-regular ink container 31.

In this embodiment, in the case where the image forming apparatus 1 is loaded with a plurality of ink containers 31 containing ink of the same color, order processing is executed at the timing when any one of the plurality of ink containers 31 containing ink of the same color becomes empty. Therefore, when one of the ink containers 31 becomes empty, a new ink container 31 filled up with ink can be early obtained and early loaded into the container loader 32. Thus, the period of time for which printing is performed while any of the ink containers 31 remains empty can be shortened, which makes it possible to further reduce the likelihood that all the plurality of ink containers 31 will end up being empty. Therefore, in this embodiment, in the image forming apparatus 1 where a plurality of ink containers 31 containing ink of the same color are loaded, whether or not to be empty of ink can be determined at an appropriate timing when ink needs to be replenished.

Which of the above <<Determination Manner 1>> and <<Determination Manner 2>> should be adopted for the determination of whether or not a remaining amount alert condition has occurred may be selectable by the user. In this case, in accordance with a user's instruction accepted by the operation device 47, the remaining amount condition determiner 102 determines whether or not the remaining amount R of ink in an individual one of the ink containers 31 has reduced to the lower limit L (Determination Manner 2) or determines whether or not the total remaining amount RT of ink of the same color has reduced to the lower limit L (Determination Manner 1).

Regarding information on open or closed states of the container covers 321 obtained from the cover open/close sensors 322, information on the presence or absence of ink containers 31 obtained from the container sensors 323, empty-of-ink information obtained from the empty sensors 324, and information on the remaining ink amounts obtained from the RFID tags, the controller 100 may control the display of the display device 473 to allow the display device 473 to display these pieces of information appropriately to notify the user of them.

A dual-container image forming apparatus in which a plurality of (for example, two) recording agent containers containing a recording agent of the same color are loaded for the purpose of reducing the downtime caused by running out of consumables, such as ink, is suited for commercial printing in which the number of sheets to be printed is large and the operating time is long. However, a commonly applied automatic ordering function for recording agent containers is not applied to the dual container system. Unlike this, in the above embodiments, in the image forming apparatus where a plurality of recording agent containers containing a recording agent of the same color are loaded, whether or not to be empty of recording agent can be determined at an appropriate timing.

The present invention is not limited to the above embodiments and can be modified in various ways. The structures, configurations, and processing of the above embodiments described with reference to FIGS. 1 to 5 are merely illustrative of the present invention and are not intended to limit the present invention to them.

## Claims

1. An image forming apparatus (1) comprising:
an image forming device that forms an image on a recording medium using a recording agent;
a plurality of container loaders (32) capable of removably loading respective recording agent containers (31) each containing a recording agent of the same color; and
a control device that includes a processor and functions, through the processor executing a control program, as:
(a) a remaining amount detector that detects a remaining amount of recording agent in each of the recording agent containers (31) loaded in the container loaders (32); and
(b) a remaining amount condition determiner (102) that determines, based on the remaining amount of recording agent in each of the recording agent containers (31) detected by the remaining amount detector, whether or not a remaining amount alert condition has occurred in which the remaining amount of recording agent in one of the recording agent containers (31) loaded in the container loaders (32) or a total remaining amount of recording agent of the same color has reduced to a predetermined lower limit.

2. The image forming apparatus (1) according to claim 1, wherein
when the processor executes the control program, the control device further functions as a total remaining amount calculator (101) that calculates the total remaining amount of recording agent of the same color based on the respective remaining amounts of recording agent in the recording agent containers (31) loaded in the container loaders (32), and
the remaining amount condition determiner (102) determines, based on the total remaining amount calculated by the total remaining amount calculator (101), whether or not the remaining amount alert condition has occurred.

3. The image forming apparatus (1) according to claim 2, wherein when any of the container loaders (32) is free of the recording agent container, the total remaining amount calculator (101) calculates the total remaining amount by assuming the remaining amount of recording agent in a recording agent container assumed to be loaded in the container loader free of the recording agent container to be zero.

4. The image forming apparatus (1) according to claim 2, when any of the container loaders (32) loads the recording agent container of non-regular type, the remaining amount condition determiner (102) keeps from determining, as for the recording agent of the same color as the recording agent contained in the recording agent container of non-regular type, whether or not the remaining amount alert condition has occurred.

5. The image forming apparatus (1) according to claim 1, wherein the remaining amount condition determiner (102) determines, regarding the recording agent in each of the recording agent containers (31), whether or not the remaining amount alert condition has occurred, but, as for the container loader free of the recording agent container, the remaining amount state determiner keeps from determining whether or not the remaining amount alert condition has occurred.

6. The image forming apparatus (1) according to claim 1, wherein the remaining amount condition determiner (102) determines, regarding the recording agent in each of the recording agent containers (31), whether or not the remaining amount alert condition has occurred, but, as for the recording agent in the recording agent container of non-regular type loaded in the container loader, the remaining amount state determiner keeps from determining whether or not the remaining amount alert condition has occurred.

7. The image forming apparatus (1) according to claim 1,
further comprising an operation device (47) that accepts an input of an instruction from a user,
wherein the operation device (47) accepts a setting of the lower limit from the user, and
the remaining amount condition determiner (102) determines, based on the lower limit set by the user and accepted by the operation device (47), whether or not the remaining amount alert condition has occurred.

8. The image forming apparatus (1) according to claim 1,
further comprising an operation device (47) that accepts an input of an instruction from a user,
wherein the remaining amount condition determiner (102) determines, in accordance with the instruction accepted by the operation device (47), whether or not a remaining amount alert condition has occurred in which the remaining amount of recording agent in the one of the recording agent containers (31) loaded in the container loaders (32) has reduced to a predetermined first lower limit or whether or not a remaining amount alert condition has occurred in which the total remaining amount of recording agent of the same color has reduced to a predetermined second lower limit.

9. The image forming apparatus (1) according to claim 1,
further comprising an operation device (47) that accepts an input of an instruction from a user,
wherein the remaining amount condition determiner (102) determines, in accordance with the instruction accepted by the operation device (47), whether or not the remaining amount of recording agent in the one of the recording agent containers (31) has reduced to the lower limit or whether or not the total remaining amount of recording agent of the same color has reduced to the lower limit.

10. The image forming apparatus (1) according to any one of claims 1 to 9,
further comprising a controller (100) that controls operation of the image forming device to allow the image forming device to perform printing,
wherein when the remaining amount condition determiner (102) determines that the remaining amount alert condition has occurred, the controller (100) executes predetermined order processing for ordering the recording agent container containing a recording agent of the same color as the recording agent as for which the remaining amount alert condition has occurred.
